# EUROPEAN PATENT APPLICATION

(11) **EP 3 112 809 A1**
(43) Date of publication of application: **04.01.2017**
(21) Application number: 15382355.4
(22) Date of filing: 03.07.2015
(51) Int. Cl.: G01C 21/36

(54) **METHOD FOR THE PRESENTATION OF INFORMATION RELATING TO LOCATIONS OF POINTS OF INTEREST**

(71) Applicant: Seat, S.A., 08760 Martorell (ES)
(72) Inventor: IBORRA VILAPLANA, Carles, 08760 BARCELONA (ES); CODINA CATALÁN, Eduard, 08760 BARCELONA (ES); BAYONA MARGARIT, Teresa, 08760 BARCELONA (ES); BAÑOS SERRADILLA, Victor, 08760 BARCELONA (ES)
(74) Representative: Isern-Jara, Nuria

(57) **Abstract**

Method for the presentation of information relating to locations of points of interest in an environment of a user (4) displayed in an image (1), comprising at least two concentric rings (11) separated one from another by a constant distance such that they represent a configurable value of magnitude, the centre (10) corresponding with a position of the user (4) in the environment, at least one point of interest (91) is represented in the image (1) by at least one icon (31) positioned in the image (1) based on the two rings (11), a location of the point of interest (91) in the environment with respect to the user (4) and the configurable value of magnitude represented by the at least two rings (11). It permits the user to comprehend the information presented in a simple and coherent manner, diverting the minimum attention from the driving.

## Description

### OBJECT OF THE INVENTION

The present patent application has as object thereof a method for the presentation of information relating to locations of points of interest.

The present invention is based more specifically on a method for the presentation of information relating to locations of points of interest in an environment of a user displayed upon an image.

### BACKGROUND OF THE INVENTION

Methods exist in the state of the art for the graphic display of information relating to locations of points of interest. Said methods describe, for example, a display based on icons representing the points of interest, however the position thereof in the image neither corresponds nor is proportional to the true location of the point of interest.

As revealed by the invention GB 2473879, a point is shown on a cartographic map equivalent to the position a point of interest. Furthermore, some icons represent the points of interest. The icons displayed on the graphic display device are not coincident with the true locations thereof but are displayed close to said true locations. Consequently, the icon and the location of the point of interest represented thereby are joined by some lines. In addition there is no scaled nor constant relationship between the location of the points of interest on the graphic display device and the icon, rather what is sought is that there shall not be a superimposition of icons in the image, for which reason the icons are located close to the edges of the graphic display device.

The document of the state of the art US 6856901 makes reference to a method of display based upon the superimposition of icons with reference to points of interest in a circumferential pattern, such that said icons are displayed always following the radial projection of the true locations thereof and joining the icons and the respective points of interest thereof by means of some lines, furthermore use is made of differing iconography and colours to identify to which point of interest each icon corresponds, by virtue of the fact that the case may arise that several icons are aligned on one and the same radial projection.

The object of the present invention is a method for the presentation of information relating to locations of points of interest upon a simplified graphic display device such that no elements exist in the image complicating the interpretation of the position of the points of interest with respect to the position of the user. It is for this reason that a display is sought not including superimposition of items of information, such as the superimposition of points of interest on a cartographic map or the superimposition of random lines referring each point of interest to the respective icon thereof. Consequently, object of the present invention is a method of graphic display of information relating to locations of points of interest in an environment permitting a user to comprehend the information presented in a simple, coherent and understandable manner, especially beneficial for graphic display devices located within the interior of a vehicle wherein a driver must give the maximum attention to the driving and divert attention for the minimum time in interpreting information from the graphic display device.

### DESCRIPTION OF THE INVENTION

In conformity with the present invention, this task is solved by means of a method for the presentation of information relating to locations of points of interest according to the independent claim 1. Additional advantages of the invention are provided in the dependent claims of the description appended below.

In this manner, the method of the present invention presents items of information relating to locations of points of interest, such that the location of the icon representing the point of interest in question is positioned in the image whereupon it is displayed observing a scale, in such manner that the user is not required to follow some lines, inducing confusion. To facilitate the comprehension on the part of the user, the icon must be in the exact point whereat the point of interest is located in the image and not in the proximities thereof nor joined by means of lines which may confuse the user making him believe that the distance at which the point of interest is located from the user himself is greater than the true distance. Additionally, the present invention seeks an adaptive method of presentation of items of information, resolving the problems flowing from several mutually close together points of interest employing lines dispersing the icons, but adapting the scale of the image in such manner that the locations of the various points of interest may be distinguished without departing from the user being enabled to visualise the location of the same with respect to the instantaneous position thereof.

According to a first aspect, the present invention relates to a method for the presentation of information relating to locations of points of interest in an environment of a user displayed in an image, wherein the image is displayed upon a graphic display device by means of a control device, furthermore the image comprises at least two rings concentric about a centre and separated from one other by a constant distance, such as to represent a configurable value of magnitude, the centre corresponding with a position of the user in the environment, at least one point of interest being represented in the image by at least one icon positioned in the image based on the at least two rings, a location of the point of interest in the environment with respect to the user and the configurable value of magnitude represented by the at least two rings.

Advantageously, the positioning of the icon in the image is based upon a vector such that the origin thereof is the centre of the concentric rings, the modulus thereof is a value directly proportional to the true distance separating the position of the user from the point of interest and the angle thereof corresponds with the orientation of the point of interest with respect to the position of the user.

More specifically, a distance between the at least one icon and the centre of the rings represents in the image a relative distance between the point of interest and the user in the environment. Furthermore, an orientation between the at least one icon and the centre of the rings represents in the image a relative orientation between the point of interest and the user in the environment. Consequently, it is a matter of a schematic graphic representation, without superimposition of elements, wherein the user may rapidly identify the orientation wherein the points of interest are to be found and the distance at which they are to be found with respect to the position thereof, being enabled to identify in a very rapid and intuitive manner which thereof is more appropriate to the route being followed by the user.

According to a preferred embodiment, the at least two rings of the image are static. It is specified that in the present description and in the attached claims the term 'static' signifies that the at least two rings present a constant position, diameter and aspect, such that that which is susceptible to change or alteration are some items of information shown upon the rings, but not the rings themselves.

Advantageously, the configurable value of magnitude is calculated based on displaying at least two icons in the image such that the configurable value of magnitude is calculated as a function of the distance separating the position of the user from at least one point of interest differing from the point of interest closest to the position of the user, by virtue of the fact that the points of interest are displayed in the image with the icons and the position of the user corresponds in the image with the centre wherewith the rings are concentric. Consequently, in the image there are simultaneously displayed the number of icons necessary such that the user may select the point of interest most appropriate to the direction of travel thereof.

Furthermore, at least one of the at least two rings comprises an indicator adjacent to the at least one of said two rings. In this manner, the indicator is located in a zone adjacent to the corresponding ring, preferably proximate to the corresponding ring and on an internal surface delimited by the ring. Advantageously, the indicator shows the configurable value of magnitude corresponding to the adjacent ring based on at least the configurable value of magnitude, on the at least two concentric rings displayed in the image and, additionally, based on the total number of concentric rings displayed in the image.

It is specified that the indicator adjacent to the at least one of the two rings shows the configurable value of magnitude such that, in a preferred mode of embodiment, said configurable value of magnitude is a distance and, in another alternative mode of embodiment, said configurable value of magnitude is a time to be run. In a first mode of embodiment wherein the configurable value of magnitude is a distance, said distance is that which separates the position of the user from the point of interest, and may also be a matter of the straight line distance separating these two locations and the distance to be run, by transitable routes, between these two locations. In the alternative mode of embodiment, wherein the configurable value of magnitude is a time to be run, said time is that which a control device estimates as required to run the distance separating the position of the user from the point of interest associated with the icon in question.

Additionally, the at least two rings present some intermediate rings circumscribed between one of the at least two rings and another of the at least two rings.

Said circumscribed intermediate rings are separated one from another by a distance corresponding to a fraction of the configurable value of magnitude. The circumscribed intermediate rings serve as a reference of the configurable value of magnitude to the user, with the objective that the user may know, in a more precise manner, the distance separating him from the point of interest.

More specifically, the configurable value of magnitude is calculated with the objective of at least two icons being simultaneously displayed in the image. In this manner, the configurable value is a scale permitting adaptation of the value of the magnitude with the objective that the information appearing on screen is always of interest to the user. In terms of example, if the points of interest are at a distance exceeding 100 kilometres from the user, the configurable value modifies the value thereof with the objective that in the image there appear at least two points of interest. On the contrary, if multiple points of interest exist in the area around the user, the configurable value of magnitude will be notably smaller than in the foregoing case, with the objective of the information appearing in the image being useful and understandable for the user. Consequently, it is important to emphasise that this display is independent of the cartographic representation of a map and that it adapts the value of the magnitude with the objective of the information being rapidly understandable by the user.

Consequently, the position of the icon in the image depends on the configurable value of magnitude. The distance of the icon with respect to the centre will be a value proportional to the true distance between the point of interest and the user, taking the configurable value of magnitude as proportional factor.

Advantageously, a reference element is positioned at least partially in the centre. In a preferred mode of embodiment, the reference element is preferably a plan view of a vehicle such that the representation of the vehicle shows the direction of travel of the user or a cardinal point. That is to say, the vehicle represented in a plan view in the centre of the image may be orientated, in one preferred mode of embodiment, corresponding to the direction of travel of the user such that the zone anterior to the plan view of the vehicle corresponds with the direction of travel of the user. In this manner, the interpretation on the part of the user regarding the direction wherein each point of interest is located is improved such that the icons located in the zone anterior to the vehicle shown represent points of interest which are also located in the zone anterior to the user.

More specifically, the plan view of the vehicle permits showing in an understandable manner the direction wherein the points of interest are located. In this manner, an orientation of an icon in the image has a value proportional to the orientation of the point of interest corresponding to the icon with respect to the user. Consequently, in terms of a non-limitative example, if this true orientation is 34° in an easterly direction, the icon will be located at 34° in an easterly direction, taking as a reference the direction of travel of the vehicle seen in plan form, this acting as reference element.

In another mode of embodiment, it may be orientated corresponding with a cardinal point, such as the north.

Advantageously, the position between the at least one icon and the reference element and the configurable value of magnitude are calculated and displayed cyclically in the image. It is specified that the updating periods of the position between the at least one icon and the reference element and the configurable value of magnitude should not be equal. Preferably, the updating period of the position between the at least one icon and the reference element is greater than the updating period of the configurable value of magnitude. Additionally, there are also calculated and displayed cyclically in the image the configurable value of magnitude of the adjacent at least one ring represented by the respective indicator thereof.

In a preferred embodiment of the invention, the selection of at least one icon in the graphic display device comprises representing the information relating to the point of interest in the image, such that on selecting an icon representing a point of interest in the environment of the user there appears in the image information relating to said point of interest, such as the precise location, contact information, offers and/or promotions... In this manner, in a possible use of the present method of graphic display in an automotive vehicle, once the user has selected the icon representing the point of interest which is most appropriate to his direction of travel, he may make a call to the point of interest or initiate navigation toward said point by means of pressing an enabled icon in the zone of information displayed.

Furthermore, the icon comprises a graphic representation symbolising the type of point of interest to which reference is made. Thus, if the point of interest is a mechanical workshop, the icon comprises a graphic display such as a spanner, if the point of interest is a petrol station, the icon comprises a graphic display such as a petrol pump.

Additionally, at least a second icon represents a plurality of points of interest, such as when there exists a plurality of points of interest very close to one another the latter are grouped in a second icon of the image. In this manner, the icon includes the plurality of points of interest which, should they not have been grouped, would be superimposed in the display.

In the attached drawings there is shown, in terms of a non-limitative example, a preferred graphic display for the presentation of information relating to locations of points of interest in the environment of a user. Other characteristics and advantages of said one method for the presentation of information relating to locations of points of interest, object of the present invention, will be evident from the description of a preferred, however not exclusive, embodiment illustrated in terms of a non-limitative example in the drawings attached, wherein:

### BRIEF DESCRIPTION OF THE DRAWINGS

Figure 1: View of a preferred graphic display for the presentation of information relating to locations of points of interest in the environment of a user.
Figure 2: View of a preferred graphic display for the presentation of information relating to locations of points of interest in the environment of a user.

### DESCRIPTION OF THE PREFERRED EMBODIMENT

On examination of the aforementioned figures, and in conformity with the numeration adopted, there may be observed therein an example of preferred embodiment of the invention comprising the parts and elements stated and described in detail below.

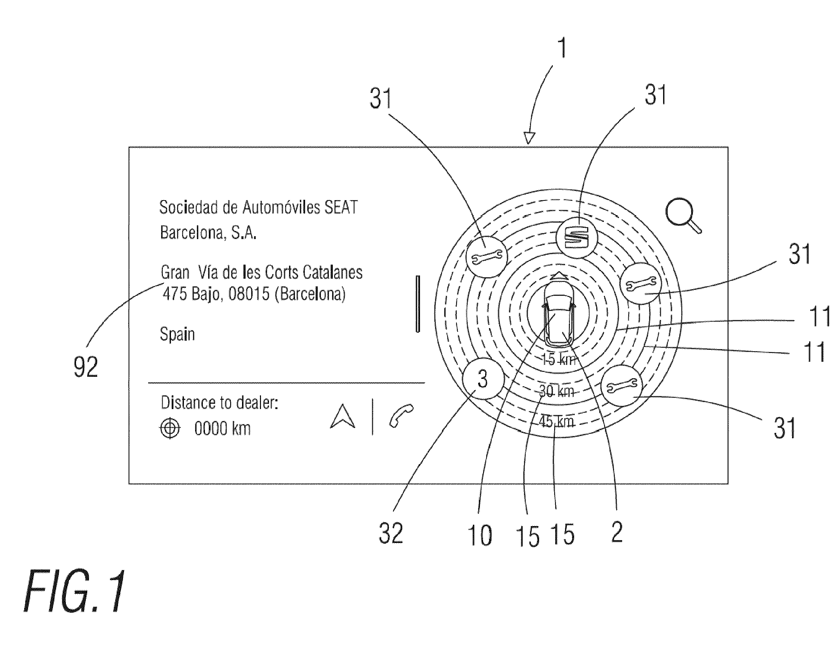

In figure 1 there is shown an image (1) for the presentation of information relating to locations of points of interest (91) in the environment of a user (4) based on the method for the presentation of information of the present invention.

Advantageously, the image (1) presents a representation of some rings (11) concentric about a centre (10), such that a reference element (2) is positioned at least partially in the centre (10). Specifically, the reference element (2) is preferably a plan view of a vehicle. The centre (10) corresponds with the position of the user (4) in the environment.

More specifically, the rings (11) are separated one from another by a constant distance, such as to represent a configurable value of magnitude.

According to a preferred embodiment, at least one point of interest (91) is represented in the image (1) by at least one icon (31), such that the at least one icon (31) is positioned in the image (1) based upon the at least two rings (11), a location of the point of interest (91) in the environment in relation to the user (4), and the configurable value of magnitude is represented by the at least two rings (11).

Advantageously, the concentric rings (11) are static, that is to say that although the image (1) may change or incorporate other graphic elements, the rings (11) remain unalterable in the position, size, form and/or aspect thereof.

Additionally, the distance of separation between the rings (11) represents a magnitude the configurable value whereof is calculated based on displaying in the image (1) at least two icons (31). That is to say that said value is based on the distance of separation between the position of the user (4) and a position of a point of interest (91) in the environment differing from the closest point of interest. More specifically, in figure 1 there are shown five icons (31) each whereof associated with a different point of interest (91). Said five icons (31) are displayed superimposed upon the rings (11) of the image (1) such that the position thereof in relation to the centre (10) is based on the true distance between the position of the user (4) and the point of interest (91) in question and in the true orientation, positioning the point of interest (91) with respect to the user (4).

Advantageously, the representation of the vehicle as reference element (2) shows the direction of travel of the user (4) or a cardinal point, such as the north. In figure 1 there are displayed three icons (31) located in the anterior part of the reference element (2) and two icons (31) located in the posterior part of said reference element (2). Consequently, the three icons (31) located in the anterior part represent three points of interest (91) substantially coincident with the direction of travel of the user (4) whilst the two icons (31) located in the posterior part of the reference element lies counter to the direction of travel of the user (4).

In an alternative embodiment, the anterior part of the vehicle representing the reference element (2) is orientated towards a cardinal point, such as the north. Consequently, the superimposed position of the icons upon the rings (11) of the image (1) is modified based on the position of the points of interest (91) in relation to the position of the user (4).

Furthermore, the position between the at least one icon (31) and the reference element (2) and the configurable value of magnitude are calculated and displayed cyclically in the image (1). This signifies that, with a given frequency, in a preferred embodiment the orientation of the vehicle representing the reference element (2) varies as a function of the position and the direction of travel of the user (4). Consequently, resulting from the travel of the user (4) through the real environment, both the distance and the orientation of the user (4) with respect to the points of interest (91) surrounding him change. These changes must be taken into account and be updated such that the graphic display in the image (1) is true to the situation of the environment. Furthermore, it is important to undertake a recalculation of the configurable value of the magnitude as the vehicle travels, having the objective that the information displayed in the image continues to be of interest to the user.

Advantageously, with the objective of achieving an intuitive comprehension of the configurable value of the magnitude, at least one of the rings (11) comprises an indicator (15) adjacent to the at least one of the rings (11). Said at least one indicator (15) shows the configurable value of the magnitude corresponding to the adjacent ring (11). More specifically, the configurable value of magnitude is a distance or a time to be run.

Furthermore, there is also calculated and displayed cyclically in the image the at least one indicator (15) showing the configurable value of the magnitude of the at least one adjacent ring (11).

Consequently, as shown in figure 1, the points of interest (91) represented by the icons (31) are workshops and/or dealers. Additionally, the magnitude of representation is a distance separating the user (4) from the respective points of interest (91). In the present example, as shown in figure 1, the configurable value of the magnitude adopts, in that instant, 60 kilometres. In this manner, each icon (31) is positioned in the image (1) at a distance from the centre (10) proportional to the true distance of the corresponding point of interest (91) from the user (4), taking as proportional factor the configurable value of the magnitude of 60 kilometres. Additionally, each icon (31) is positioned in the image (1) at an orientation from the centre (10) proportional to the true orientation of the corresponding point of interest (91) and the user (4).

More specifically, the number of rings (11) of figure 1 is three. Each ring (11) has associated therewith an indicator (15) representing the value of the magnitude. It is consequently understood that the rings act as references or such that the user (4) may rapidly interpret the distance from each point of interest (91). In this manner, each indicator (15) shows a value depending on the configurable value of the magnitude, in this case 60 kilometres, and of the number of rings (11) displayed in the image (1). By virtue of the fact that the distance separating each ring (11) is constant, the value of each indicator (15) will be proportional between those shown by the remainder of indicators (15). In figure 1, each ring represents a distance from the user of 15, 30, 45 kilometres. Additionally, and with the objective of improving the precision wherewith the user (4) may interpret the distance from the points of interest (91), concentric rings are interposed between the rings (11).

In a preferred embodiment of the invention, the selection of at least one icon (31) on the graphic display device (5) comprises representing the information relating to the point of interest (92) in the image (1), such that on selecting an icon (31) representing a point of interest of the environment of the user (4) there appear in the image (1) items of information relating to said point of interest (92), such as the exact location, contact information, offers and/or promotions... In this manner, each icon (31) comprises a graphic display of the type of point of interest (31) represented thereby. In figure 1 there may be observed how the icons (31) comprise a spanner, representing mechanical workshops, and the badge of a brand of automobiles, representing dealers.

Additionally, at least a second icon (32) represents a plurality of points of interest (91), such that when there exists a plurality of points of interest (91) very close to one another, these latter are grouped in a single second icon (32) of the image (1). In this manner, the second icon (32) includes the plurality of points of interest (91) which, should they not have been grouped, would be superimposed in the display. More specifically, the second icon (32) comprises a number equivalent to the number of points of interest (91) grouped therein. In figure 1 it is shown that the second icon (32) groups 3 different points of interest (91).

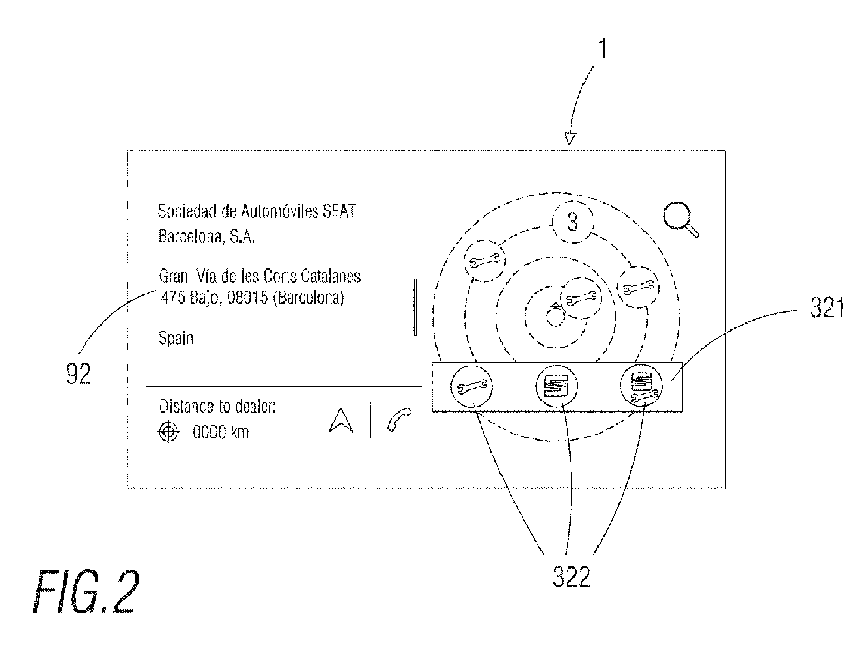

In figure 2, the plurality of points of interest (91) represented by a single second icon (32) is expanded into a menu (321) appearing on selecting said second icon (32). Within the menu (321) each point of interest (91) appears represented by means of a subicon (322). On selecting one of these subicons (322) representing the points of interest (91) there appears in the image (1) the information relating to the point of interest (92) in question.

The details, the shapes, the dimensions and other ancillary elements together with the components employed in the implementation of a method for the presentation of information relating to the locations of points of interest may be conveniently substituted by others being technically equivalent and not departing from the essentiality of the invention nor from the scope defined by the claims included below.

### LIST OF REFERENCES

- 1.: image
- 10.: centre
- 11.: rings
- 15.: indicator
- 2.: reference element
- 31.: icon
- 32.: second icon
- 321.: menu
- 322.: subicon
- 4.: user
- 5.: graphic display device
- 6.: control device
- 91.: point of interest
- 92.: information relating to the point of interest

## Claims

1. Method for the presentation of information relating to locations of points of interest in an environment of a user (4) displayed in an image (1), wherein:
- the image (1) is displayed upon a graphic display device (5) by means of a control device (6),
- the image (1) comprises at least two rings (11),
- the at least two rings (11) are concentric about a centre (10),
- the at least two rings (11) are separated one from another by a constant distance such that they represent a configurable value of magnitude,
- the centre (10) corresponds with a position of the user (4) in the environment,
- at least one point of interest (91) is represented in the image (1) by at least one icon (31),
- the at least one icon (31) is positioned in the image (1) based on the at least two rings (11), a location of the point of interest (91) in the environment with respect to the user (4) and the configurable value of magnitude represented by the at least two rings (11).

2. Method for the presentation of information relating to locations of points of interest in an environment of a user (4) displayed in an image (1) according to claim 1, **characterised in that** the at least two rings (11) of the image (1) are static.

3. Method for the presentation of information relating to locations of points of interest in an environment of a user (4) displayed in an image (1) according to claim 1, **characterised in that** the configurable value of the magnitude is calculated based on displaying in the image (1) at least two icons (31).

4. Method for the presentation of information relating to locations of points of interest in an environment of a user (4) displayed in an image (1) according to claim 1, **characterised in that** at least one of the at least two rings (11) comprises an indicator (15) adjacent to the at least one of the two rings (11).

5. Method for the presentation of information relating to locations of points of interest in an environment of a user (4) displayed in an image (1) according to claim 4, **characterised in that** the indicator (15) shows the configurable value of the magnitude corresponding to the adjacent ring (11).

6. Method for the presentation of information relating to locations of points of interest in an environment of a user (4) displayed in an image (1) according to claim 1, **characterised in that** a reference element (2) is positioned at least partially in the centre (10).

7. Method for the presentation of information relating to locations of points of interest in an environment of a user (4) displayed in an image (1) according to claim 1, **characterised in that** the configurable value of magnitude is a distance or time to be run.

8. Method for the presentation of information relating to locations of points of interest in an environment of a user (4) displayed in an image (1) according to claim 1, **characterised in that** the position between the at least one icon (31) and the reference element (2) and the configurable value of the magnitude are calculated and displayed cyclically in the image (1).

9. Method for the presentation of information relating to locations of points of interest in an environment of a user (4) displayed in an image (1) according to claim 6, **characterised in that** the reference element (2) is preferably a plan view of a vehicle.

10. Method for the presentation of information relating to locations of points of interest in an environment of a user (4) displayed in an image (1) according to claim 6, **characterised in that** the representation of the vehicle shows the direction of travel of the user (4) or a cardinal point.

11. Method for the presentation of information relating to locations of points of interest in an environment of a user (4) displayed in an image (1) according to claim 1, **characterised in that** the selection of at least one icon (31) on the graphic display device (5) comprises representing the information relating to the point of interest (92) in the image (1).

12. Method for the presentation of information relating to locations of points of interest in an environment of a user (4) displayed in an image (1) according to claim 1, **characterised in that** the at least a second icon (32) represents a plurality of points of interest (91).

## Amended claims

### Amended claims in accordance with Rule 137(2) EPC.

1. Method for the presentation of information relating to locations of points of interest in an environment of a user displayed in an image (1), wherein:
- the image (1) is displayed upon a graphic display device (5) by means of a control device (6),
- the image (1) comprises at least two rings (11),
- the at least two rings (11) are concentric about a centre (10),
- the at least two rings (11) are separated one from another by a distance, that on the image (1) it's constant, wherein the distance represents a value of magnitude, that is configurable.
- the centre (10) corresponds with a position of the user in the environment,
- at least one point of interest is represented in the image (1) by at least one icon (31),
- the at least one icon (31) is positioned in the image (1) based on the at least two rings (11), a location of the point of interest in the environment with respect to the user and the value of magnitude, which is configurable, represented by the at least two rings (11), and
- at least a second icon (32) represents a plurality of points of interest.

2. Method according to claim 1, **characterised in that** the at least two rings (11) of the image (1) are static relative to the graphic display device (5).

3. Method according to claim 1, **characterised in that** the value of the magnitude, which is configurable, is calculated based on displaying in the image (1) at least two icons (31).

4. Method according to claim 1, **characterised in that** at least one of the at least two rings (11) comprises an indicator (15) adjacent to the at least one of the two rings (11) and **in that** the indicator (15) shows the value of the magnitude, which is configurable, corresponding to the adjacent ring (11).

5. Method according to claim 1, **characterised in that** a reference element (2) is positioned at least partially in the centre (10) and **in that** the reference element (2) is a plan view of a vehicle.

6. Method according to claim 5, **characterised in that** the representation of the vehicle shows the direction of travel of the user or a cardinal point.

7. Method according to claim 1, **characterised in that** the value of magnitude, which is configurable, is a distance or time to be run.

8. Method according to claim 1, **characterised in that** the value of the magnitude, which is configurable, and the position between the at least one icon (31) and the reference element (2) are calculated and periodically updated in the image (1).

9. Method according to claim 1, **characterised in that** the selection of at least one icon (31) on the graphic display device (5) comprises representing the information relating to the point of interest (92) in the image (1).
